# EUROPEAN PATENT APPLICATION

(11) **EP 4 679 206 A1**
(43) Date of publication of application: **14.01.2026**
(21) Application number: 24187505.3
(22) Date of filing: 09.07.2024
(51) Int. Cl.: G05B 19/042, G05B 23/02

(54) **PROVISIONING REPLACEMENT COMPONENTS IN AUTOMATION SYSTEMS**

(71) Applicant: ABB SCHWEIZ AG, 5400 Baden (CH)
(72) Inventor: POOK, Stefan, 32423 Minden (DE); JESKE, Ralf, 32469 Petershagen (DE); SCHNEIDER, Rodolfo, Westlake, 44145 (US); DAHL, Martin, 32312 Lübbecke (DE); HOLMGREN, Olof, 72231 Västerås (SE); MA, Jijun, Hangzhou, 310000 (CN)
(74) Representative: Maiwald GmbH

(57) **Abstract**

Described is a method for decentralised provisioning of a replacement component in an industrial automation system. The method comprises:
detecting that a failed component of the industrial automation system has been replaced with the replacement component;
obtaining provisioning data for the replacement component from at least one pre-provisioned component of the industrial automation system, wherein the industrial automation system stores provisioning data for its components in a distributed manner among those components themselves; and
provisioning the replacement component using the obtained provisioning data.

## Description

### FIELD OF THE INVENTION

The invention relates to systems and methods for decentralised provisioning of replacement components in industrial automation systems.

### BACKGROUND

Industrial automation systems typically comprise numerous interconnected components which require periodic replacement due to wear or failure. Traditionally, provisioning data for replacement components are obtained manually by the plant operator using engineering tools or deployed from a centralized server. Such approaches render the component replacement process error prone, time-consuming, and/or vulnerable to compatibility issues.

### SUMMARY

It would therefore be advantageous to facilitate the component replacement process.

According to a first aspect of the invention, there is provided a method for decentralised provisioning of a replacement component in an industrial automation system, the method comprising:
detecting that a failed component of the industrial automation system has been replaced with the replacement component;
obtaining provisioning data for the replacement component from at least one pre-provisioned component of the industrial automation system, wherein the industrial automation system stores provisioning data for its components in a distributed manner among those components themselves; and
provisioning the replacement component using the obtained provisioning data.

In one example, the step of detecting that the failed component has been replaced with the replacement component is performed by the same pre-provisioned component from which the provisioning data for the replacement component is obtained. By "replacement component" is meant the to-be-provisioned component, i.e., that component which is used to replace the failed component and which is to be provisioned using the techniques described herein.

The provisioning data may comprise software installation data for the replacement component. The software installation data may enable the replacement component to install or upgrade software. The software to be installed or upgraded may comprise an application to be executed by the replacement component, for example a process control application as described herein. Additionally or alternatively, the software to be installed or upgraded may comprise firmware for the replacement component. The software installation data may comprise at least one executable. In an example, the provisioning data, or more particularly the software installation data, facilitates a downgrade to an older version of software that is pre-installed on the replacement component. For example, the replacement component may be shipped with new or up-to-date software, e.g. firmware, which is automatically rolled back to the older version used in the industrial automation system, as preferred by the plant operator.

In addition to or instead of software installation data, the provisioning data may comprise configuration data for the replacement component. The configuration data may comprise network configuration data, which may comprise at least one network setting such as an IP address. The configuration data, e.g., the network configuration data, may comprise fieldbus stack configuration data, for accessing a fieldbus network. The configuration data may comprise a list of services to be executed by the replacement component (for example, when the replacement component comprises a controller), for example during later operation. The replacement component may be further configured to obtain rudimentary network configuration from a local source, for example from a mounting termination unit (MTU) to which the replacement component is physically and communicatively coupled, wherein the rudimentary network connection data enables the replacement component to establish at least a rudimentary network connection to the at least one pre-provisioned component, from which the provisioning data, optionally including further network configuration data, is obtained. For example, the configuration data may specify a physical port which is usable for accessing at least one network to which the replacement component is also connected.

The provisioning data or any portion thereof may be specific to the replacement component and/or its operating environment. That is, the provisioning data are usable for provisioning the replacement component for provision but may or may not be usable for one or more other components of the industrial automation system, for example the at least one component at which the provisioning data for the replacement component are stored. For example, the provisioning data may comprise node-specific data, type-specific data, and/or application-specific data. Node-specific data may comprise provisioning data which are specific to a node, such as a hardware node or network node, that is associated with the replacement component. Type-specific data may comprise provisioning data which are specific to a type of the replacement component, for example to a hardware type or brand of the replacement component. Application-specific data may comprise provisioning data which are specific to an application to be executed by the replacement component.

The provisioning data may be stored in a predetermined or standardized format for retrieval and use by a variety of components.

Storage of the provisioning data in a distributed manner among the components of the industrial automation system may mean that one or more of the components store provisioning data for one or more of the other components. One of the components may store its own provisioning data and/or provisioning data for at least one of the other components. That component's own provisioning data and the provisioning data for the at least one of the other components may be different. Any of the components may obtain its provisioning data from any of the other components at which that provisioning data is stored. Provisioning data for a first one of the components may be stored at least partially by a second one of the components. Provisioning for a first one of the components may be stored at least partially by a second one of the components and at least partially by a third one of the components. Complete provisioning data for a first one of the components may be stored by a second one of the components as well as by a third one of the components. One of the components which stores provisioning data for another of the components may fulfil the same role as, or a different role than, the other component for which the provisioning data is intended.

The arrangements described herein in these ways provide decentralized access to provisioning from distributed sources, as opposed to centralized provisioning in which each component obtains its provisioning data from a central source.

Any one or more of the components may store provisioning data in non-volatile storage comprised in, or accessible by, those one or more components. Provisioning data may be stored in encrypted form, wherein the component for which that provisioning data is intended is configured to decrypt the encrypted provisioning data.

A distributed hash table is used in one alternative implementation, in which provisioning data for various components are stored as key-value pairs in the distributed hash table, and in which the replacement component retrieves its provisioning data using a key given to it by a peer component following the replacement.

Obtaining the provisioning data may comprise establishing at least one connection from the at least one pre-provisioned component to the replacement component and utilizing the at least one established connection to transmit the provisioning data to the replacement component. Obtaining the provisioning data may comprise transmitting the data from the at least one pre-provisioned component to the replacement component, for example by downloading or pushing the provisioning data.

Provisioning the replacement component may comprise installing or upgrading software using software installation data comprised in the provisioning data. Additionally or alternatively, provisioning the replacement component may comprise configuring the replacement component using configuration data comprised in the provisioning data. Provisioning the replacement component may comprise verifying that installation and/or upgrade of software or configuration of the replacement component has been carried out successfully. Provisioning the replacement component may further comprise establishing one or more network connections, synchronizing application data via the established one or more network connections, before resuming one or more tasks formerly carried out by the failed component. In that regard, the method may further comprise the step of using a process control system comprising the provisioned replacement component to control an industrial production process carried out by an industrial automation system.

According to a second aspect, there is provided a process control system for an industrial automation system, the process control system being configured to carry out the method of the first aspect.

According to a third aspect, there is provided an industrial automation system comprising the process control system of the second aspect. There is also provided an automation system configured to carry out the method of the first aspect.

The method of the first aspect may be computer-implemented.

According to a fourth aspect, there is provided a computing system configured to perform the method of the first aspect.

According to a fifth aspect, there is provided a computer program (product) comprising instructions which, when executed by a computing system, enable or cause the computing system to carry out the method of the first aspect.

According to a sixth aspect, there is provided a computer-readable (storage) medium comprising instructions which, when executed by a computing system, enable or cause the computing system to carry out the method of the first aspect. The computer-readable medium may be transitory or non-transitory, volatile or non-volatile.

The computing system can typically be a processor, for example a processor that is part of a computer.

The invention may include one or more aspects, examples or features in isolation or combination whether specifically disclosed in that combination or in isolation. Any optional feature or sub-aspect of one of the above aspects applies as appropriate to any of the other aspects.

By "industrial automation system" is meant a plant comprising one or more pipelines, production lines, and/or assembly lines for carrying out an industrial production process, for example for transforming one or more educts into a product and/or for assembling one or more components into a final product.

By "software" is meant herein any instruction, code, program, and/or data that tells a computing system how to perform one or more tasks, and may include platform/system software (including for example firmware, a device driver, or an operating system, and so on) and/or application software (which in the case of an industrial automation system may comprise a control application including control logic instructing a controller how to respond to instrumentation signals with appropriate control signals to maintain functioning of an industrial process).

The term "upgrade" is used herein to refer to changes performed for example for enhanced functionality, bug-fixes, or security related changes. The upgrade may be arranged for backwards compatibility with one or more preexisting pieces of software. The upgrade may comprise a patch or a full, replacement version.

The term "component" as used herein refers to a component of an industrial automation system which has the capability to obtain or provide the provisioning data via communications over a bus or network. In that sense, the component may be referred to as an "active component". For example, the component may be any component which comprises a network switch. The network switch may enable the component to communicate via at least one network, such as a control network. Any such component which comprises a network switch may be referred to alternatively as a network device. The term "component" may comprise a controller, such as that described herein.

By "redundant" is meant that the component in question represents one of two or more identical or similar components which are included to ensure availability in the case that one of them malfunctions.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The present disclosure thus provides for decentralised provisioning of replacement components in industrial automation systems. Using the techniques described herein, replacement components can be provisioned in a fashion which reduces the amount of interaction needed by the plant operator, while the replacement components can rapidly take over tasks from failed components.

As opposed to traditional reliance on a central server, which poses several challenges including potential single point of failure, scalability issues, and increased latency, the arrangements described herein leverage distributed data storage technologies and peer-to-peer communication techniques to ensure reliable, scalable, and rapid access to provisioning data.

### BRIEF DESCRIPTION OF THE DRAWINGS

A detailed description will now be given, by way of example only, with reference to the accompanying drawings, in which:-
FIG. 1 provides a schematic overview of a process control system implementing decentralised provisioning data acquisition;
FIG. 2 is a flowchart illustrating a method for decentralised provisioning of a replacement component in an industrial automation system; and
FIG. 3 illustrates peer-to-peer communication among process control system components in various non-limiting use cases.

### DETAILED DESCRIPTION

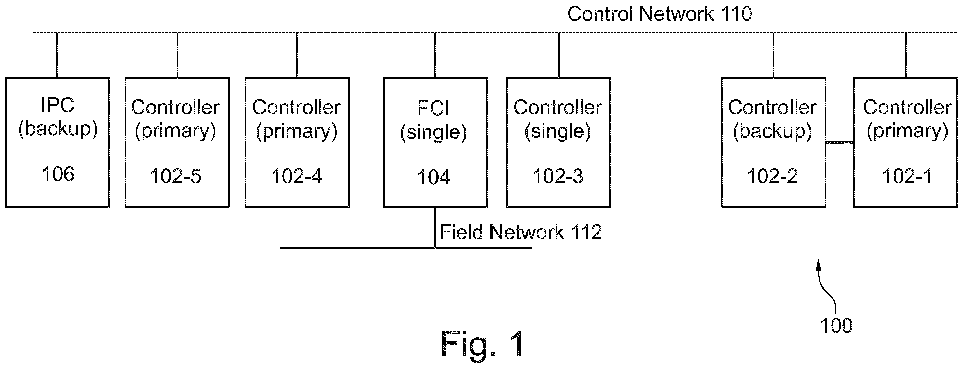

FIG. 1 illustrates a process control system 100 for controlling a process carried out by an industrial automation system (not shown). The process control system 100 comprises a plurality of interconnected components including controllers 102-1, 102-2, 102-3, 102-4, 102-5, collectively referred to as controllers 102, as well as a fieldbus communications interface (FCI) 104 and an industrial personal computer (IPC) 106. The components 102-106 communicate with one another via a control network 110. The FCI 204 facilitates communication between the components 102-106 and one or more field devices (not shown) via a field network 112.

Each of the controllers 102 is configured to control a respective process carried out by the automation system. The process control system 100 may find application in any field of industry where process automation is desired, such as energy, oil and gas, chemical, petrochemical, and so on. Each of the controllers 102 handles process control and monitoring for the automation system by receiving sensor signals from plant instrumentation, and outputting control signals for controlling plant equipment such as pumps, valves, conveyors, mixers, and heaters. Any such instrumentation or equipment may form part of one or more of the field devices.

Each of the controllers 102 is configured to execute software comprising a control application to generate the control signals on the basis of the sensor signals. For executing the control application, each of the controllers 102 comprises hardware such as processing circuitry, which may take the form for example of a CPU, MCU, SoC, FPGA, DSP, and/or an Al-engine, together with any memory to be used in the processing of signals. The processing circuitry may be further configured to perform any one or more of the steps of the methodology described herein.

For interfacing between the hardware and the software, each of the components 102-106 comprises firmware, that is, software that provides low-level control of the hardware.

Each of the components 102-106 further comprises a data module (not shown) capable of storing and obtaining provisioning data from decentralised sources. The data module comprises non-volatile storage for storing data, such as software, e.g. the control application and the firmware, optionally also network configuration data for communicating for example with other components via the control network 110.

Firmware upgrades are becoming more frequent in automation systems. The reasons for this are various, but include for example enhanced functionality, bug-fixes, or security related changes. Even though most changes in firmware are backward compatible, it is of interest to have the same version throughout the automation system or plant. Especially when a failed component needs to be replaced by a spare part, it is desirable for firmware to be upgradable in a fashion that reduces the amount of interaction needed by the plant operator. The spare part needs to be reconfigured according to the previous component, so that it can take over tasks from its predecessor. Conventionally, firmware and control applications are installed either manually by the plant operator using engineering tools or deployed from a centralized server.

The present disclosure therefore provides for decentralized provisioning of replacement components in industrial automation systems, using a new approach in which the industrial automation system stores provisioning data for its components in a distributed manner among those components themselves, such that the provisioning data for the replacement component can be obtained from at least one pre-provisioned component of the industrial automation system.

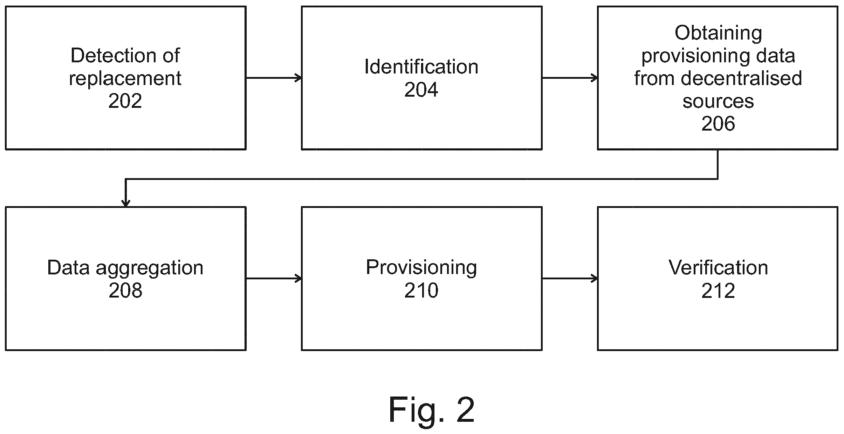

FIG. 2 illustrates a method for decentralised provisioning of a replacement component in an industrial automation system according to the present disclosure.

When a component of the industrial automation system fails and is replaced with a replacement component, this is detected at step 202. The replacement component establishes a connection to the control network 110, for example using a network configuration obtained from a mounting termination unit (MTU) to which it is coupled. If required by plant security policies, the replacement component may optionally further obtain a plant-specific certificate. Once these steps have been carried out, a pre-provisioned component is able to detect that the replacement component has been used to replace a failed component and that the replacement component requires provisioning data.

The replacement component is optionally identified at step 204, using for example a model number indicating its type and/or brand. In other examples, it may be assumed that the replacement component is identical to the failed component that was replaced (in at least one relevant respect, e.g. type and/or brand).

Provisioning data for the replacement component is obtained at step 206.

In one example, the same component which detected replacement of the failed component may directly transmit (e.g., push or download) the required provisioning data to the replacement component, if that (pre-provisioned) component already stores the required provisioning data. According to the present disclosure, that component holds (in its non-volatile storage) not only its own node-specific, type-specific and/or application-specific executables and/or configuration data, but also node-specific, type-specific and/or application-specific executables and/or configuration data for at least one other peer component in the automation system.

In another example, one or more peer components serving as decentralised sources are queried for the required data. Any peer component which stores at least part of the required data may then transmit that data to the querying component. The query may originate from the detecting component and/or from the replacement component, for example.

The obtained data is optionally aggregated at step 208, in the case that the provisioning data is obtained from multiple decentralised sources, for example partially from a first peer component and partially from a second peer component. The provisioning data is optionally analysed to verify its integrity or authenticity and/or decrypted using at least one cryptographic method.

At step 210, the obtained provisioning data is used by the replacement component for provisioning. For example, after the required executables and/or configuration data have been transferred, the replacement component performs a firmware upgrade and/or configures itself. The replacement component may also establish further network connections, synchronize application-specific data via the established further network connections, and ultimately return to normal operation.

Post-provisioning verification is optionally performed at step 212 to ascertain that the replacement component meets the required operational status.

The provisioning data in one non-limiting example comprises various types of configuration data and executables to be loaded to the replacement component. The provisioning data may comprise any one or more of: node-specific data, such as the IP address or other configuration which is specific to one hardware node in the plant; type-specific data, such as the firmware, which may be specific to one hardware or brand type; application-specific data, such as the control application or a fieldbus stack configuration which defines the later task of the component.

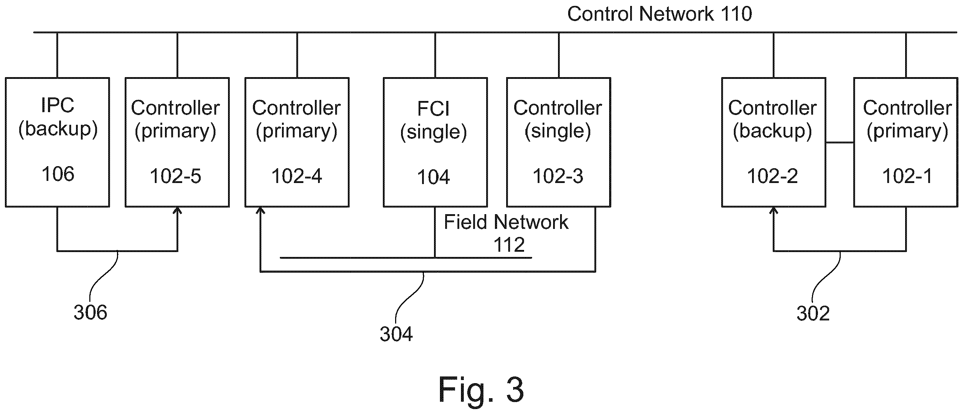

With reference to FIG. 3, various non-limiting use cases are now described, in which the decentralized upgrade and configuration is applied in the following way:-
1. Controller 102-1 and controller 102-2 form a redundant pair. After controller 102-2 fails and is replaced, its provisioning data is automatically loaded from controller 102-1 using peer-to-peer communication 302.
2. FCI 104 is the fieldbus communication interface that supplies controller 102-3 with data from the field network 112. After FCI 104 is replaced, controller 102-3 reconfigures it using peer-to-peer communication 304 to reestablish the field network connection.
3. The IPC 106 serves as backup for multiple controllers 102. After controller 102-5 is replaced, the IPC 106 downloads provisioning data to the replacement controller using peer-to-peer communication 306, even though the two units might run a different OS or executable.

In the non-limiting use cases described above, the loading sequence is able to be carried out due to the existence of a logical connection between the components.

However, it is to be understood that the present disclosure is not limited to arrangements including such a logical connection.

In a variant, following replacement of a component, two or more of the remaining components may negotiate to determine which one of them is to reconfigure the replacement component (e.g. by comparing CPU load or other resource utilization or performance metrics among themselves).

The apparatus and methods disclosed herein thus facilitate automatic provisioning of replacement components, using minimal operator involvement, in a move towards zero-touch provisioning.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for decentralised provisioning of a replacement component in an industrial automation system, the method comprising:
detecting that a failed component of the industrial automation system has been replaced with the replacement component;
obtaining provisioning data for the replacement component from at least one pre-provisioned component of the industrial automation system, wherein the industrial automation system stores provisioning data for its components in a distributed manner among those components themselves; and
provisioning the replacement component using the obtained provisioning data.

2. The method as claimed in claim 1, wherein detecting that the failed component has been replaced with the replacement component is performed by the pre-provisioned component from which the provisioning data for the replacement component is obtained.

3. The method as claimed in claim 1 or 2, wherein the provisioning data comprise software installation data for the replacement component.

4. The method as claimed in claim 3, wherein the software installation data enable the replacement component to install or upgrade software.

5. The method as claimed in claim 4, wherein the software to be installed or upgraded comprises an application to be executed by the replacement component.

6. The method as claimed in claim 4 or 5, wherein the software to be installed or upgraded comprises firmware for the replacement component.

7. The method as claimed in any preceding claim, wherein the provisioning data comprise configuration data for the replacement component.

8. The method as claimed in any preceding claim, wherein the provisioning data comprise node-specific data, type-specific data, and/or application-specific data.

9. The method as claimed in claim 8, wherein the node-specific data comprise provisioning data which are specific to a node that is associated with the replacement component.

10. The method as claimed in claim 8 or 9, wherein the type-specific data comprise provisioning data which are specific to a type of the replacement component.

11. The method as claimed in any of claims 8-10, wherein the application-specific data comprise provisioning data which are specific to an application to be executed by the replacement component.

12. The method as claimed in any preceding claim, wherein obtaining the provisioning data comprises establishing at least one connection from the at least one pre-provisioned component to the replacement component and utilizing the at least one established connection to transmit the provisioning data to the replacement component.

13. The method as claimed in any preceding claim, wherein provisioning the replacement component comprises installing or upgrading software using software installation data comprised in the provisioning data, and/or configuring the replacement component using configuration data comprised in the provisioning data.

14. A process control system for an industrial automation system, the process control system being configured to carry out the method as claimed in any preceding claim.

15. A computer-readable medium comprising instructions which, when executed by a computing system, cause the computing system to carry out the method as claimed in any of claims 1-13.
